# FASCICULE DE BREVET EUROPEEN

(11) **EP 2 256 885 B1**
(45) Date de publication et mention de la délivrance du brevet: **21.08.2013**
(21) Numéro de dépôt: 10354013.4
(22) Date de dépôt: 22.03.2010
(51) Int. Cl.: H02B 13/025

(54) **Dispositif de limitation de la surpression à l'intérieur d'un compartiment appartenant à un appareil électrique**
Vorrichtung zur Begrenzung des Überdrucks in einer Kammer eines Elektrogeräts
Device for limiting the excess pressure inside a compartment belonging to an electrical device

(30) Priorité: 28.05.2009 FR 0902571
(43) Date de publication de la demande: 01.12.2010
(73) Titulaire: Schneider Electric Industries SAS, 92500 Rueil-Malmaison (FR)
(72) Inventeur: Allard, Hervé, 38050 Grenoble Cedex 09 (FR); Milan, Thierry, 38050 Grenoble Cedex 09 (FR); Kersusan, Jean-Pierre, 38050 Grenoble Cedex 09 (FR)
(74) Mandataire: Colette, Marie-Françoise

(56) Documents cités:
- DE-A1- 4 107 673
- US-A- 5 892 195

## Description

La présente invention concerne un dispositif de limitation de la surpression à l'intérieur d'un compartiment appartenant à un appareil électrique, ledit dispositif comportant une ouverture prévue dans l'une des parois de l'enveloppe du compartiment, ladite ouverture étant obturée par un clapet pendant le fonctionnement normal de l'appareil électrique, ledit clapet étant apte à libérer l'ouverture précitée sous l'effet d'une surpression à l'intérieur du compartiment crée par un défaut interne à l'intérieur du compartiment, de manière à permettre l'évacuation des gaz chauds produits par le défaut interne vers l'extérieur du compartiment.

Lorsqu'un défaut d'arc interne survient à l'intérieur d'un compartiment dans une cellule électrique, ledit compartiment logeant par exemple un interrupteur ou un disjoncteur, se produisent des surpressions engendrant des dégagements de gaz chauds et inflammables susceptibles de créer des incendies ou des explosions des enveloppes des appareils pouvant entraîner des projections dangereuses.

Une solution à ce problème consiste à réaliser dans les parois métalliques ou autres des enveloppes des appareils, des ouvertures aptes à être obturées ou libérées au moyen de clapets, libérant ou empêchant l'accès à des conduits d'évacuation desdits gaz. Ces clapets s'ouvrent sous l'effet de la surpression et créent ainsi au-delà d'une valeur donnée de cette surpression, une ouverture calibrée permettant d'évacuer et de détendre les gaz chauds dus à l'arc, permettant ainsi de limiter le niveau de la surpression dans le compartiment. Ces clapets s'ouvrent dans un seul sens et ne permettent un dégagement des gaz que dans une seule direction, c'est-à-dire vers l'extérieur du compartiment.

Voir les brevets DE 4107673 et US 5892195.

La présente invention se propose d'améliorer les performances à la tenue à un défaut d'arc interne survenant à l'intérieur d'un compartiment d'un appareil électrique.

A cet effet, la présente invention a pour objet un dispositif de limitation de la surpression à l'intérieur d'un compartiment du genre précédemment mentionné, ce dispositif étant **caractérisé en ce que** ce clapet est intégré à la paroi de l'enveloppe du compartiment, et est maintenu sur ladite paroi dans l'ouverture précitée par des moyens de maintien permettant au clapet de s'ouvrir dans les deux sens, c'est-à-dire vers l'extérieur du compartiment de manière à permettre la circulation des gaz de l'intérieur vers l'extérieur du compartiment, ou bien vers l'intérieur du compartiment de manière à permettre la circulation des gaz de l'extérieur vers l'intérieur du compartiment selon que la surpression est présente à l'intérieur ou à l'extérieur du compartiment.

Selon l'invention, le clapet est apte à se déformer lors d'une surpression à l'intérieur ou à l'extérieur du compartiment, ladite déformation conduisant à la désactivation des moyens de maintien entraînant le dégagement du clapet de l'ouverture de la paroi de l'enveloppe et donc, la circulation des gaz à travers l'ouverture.

Selon une caractéristique particulière, les moyens de maintien précités comportent sur deux bords extérieurs opposés du clapet, des moyens d'accrochage destinés à coopérer avec respectivement deux bords en regard délimitant l'ouverture de la paroi précitée.

Selon une autre caractéristique, ces moyens d'accrochage comprennent, sur chacun des bords opposés précités du clapet, au moins deux languettes solidaires du clapet, les deux languettes s'étendant respectivement de part et d'autre du plan du clapet, de manière à réaliser la fixation du clapet sur la paroi par introduction du bord correspondant de la paroi délimitant l'ouverture entre les deux languettes précitées.

Selon une autre caractéristique, ces languettes sont venues de matière avec la paroi du clapet et sont décalées suivant la direction longitudinale du bord correspondant du clapet.

Selon une autre caractéristique, les moyens de maintien précités comportent, sur au moins deux bords opposés du clapet, un joint s'étendant sur une partie ou la totalité desdits bords, le(les)dit(s) joint(s) coopérant respectivement avec deux bords en regard délimitant l'ouverture précitée lors de la fixation précitée.

Ainsi, ce joint peut présenter un profil extérieur qui permet de réaliser un encliquetage. Il permet d'augmenter l'étanchéité entre les compartiments.

Selon une autre réalisation, les moyens de maintien précités comportent un cadre réalisé en un matériau présentant une faible tenue mécanique, ledit cadre étant fixé autour du clapet et sur le bord de la paroi délimitant l'ouverture précitée, ledit cadre étant destiné à céder sous l'effet d'une certaine pression.

Selon une autre réalisation, les moyens de maintien précités comportent des ouvertures prévues dans la paroi et permettant chacune le passage d'un rivet supportant deux rondelles de dimension calibrée et situées de part et d'autre de la paroi de l'enveloppe, ledit clapet étant destiné à être maintenu entre les deux rondelles après le montage dudit clapet dans ladite ouverture de la paroi.

La présente invention a encore pour objet une cellule électrique comportant au moins un compartiment, ledit compartiment logeant un appareillage électrique, cette cellule étant **caractérisée en ce que** ledit compartiment comporte au moins un dispositif de limitation de la surpression comportant les caractéristiques précédemment mentionnées prises seules ou en combinaison.

Selon une caractéristique particulière, cette cellule comporte en outre une enceinte formant un espace clos autour de l'ouverture d'au moins l'un des dispositifs de limitation précités, ladite enceinte étant destinée à recevoir les gaz en provenance du(des) compartiment(s) en surpression, lesdits gaz circulant de l'intérieur du(des) compartiment(s) vers l'enceinte ou bien de l'intérieur de l'enceinte vers le(s) compartiment(s) selon que la surpression se situe, au niveau de 1' (des) ouverture(s) précitée(s), à l'intérieur du (des) compartiment (s) ou bien à l'intérieur de l'enceinte.

Selon une autre caractéristique, ladite cellule comporte plusieurs compartiments comportant chacun au moins un dispositif de limitation de la surpression comportant les caractéristiques précédemment mentionnées prises seules ou en combinaison.

Selon une autre caractéristique, cette cellule comporte trois compartiments comportant respectivement un dispositif de limitation de la surpression, pour le premier, un dispositif de limitation de la surpression pour le second, et trois dispositifs de limitation de la surpression pour le troisième.

Selon une autre caractéristique, l'un au moins des compartiments ou l'enceinte comporte au moins un clapet communiquant avec un caniveau contenant les câbles raccordés à l'appareillage, le seuil d'éclatement du clapet de ce (ces) dispositif(s) étant défini de façon que le(s) clapet(s) communiquant avec le caniveau sorte(nt) de son (leur) ouverture correspondante après les autres clapets.

Ce clapet peut être par exemple un clapet selon l'invention ou un clapet unidirectionel.

Selon une autre caractéristique, l'un au moins des compartiments ou l'enceinte comporte au moins un clapet communiquant avec l'extérieur, le seuil d'éclatement du clapet de ce (ces) dispositif(s) étant défini de façon que le(s) clapet(s) communiquant avec l'extérieur sorte(nt) de son (leur) ouverture correspondante après les autres clapets.

Ce clapet peut être par exemple un clapet selon l'invention ou un clapet unidirectionnel.

La présente invention a encore pour objet un ensemble d'au moins deux cellules comportant les caractéristiques précédemment mentionnées pour les cellules prises seules ou en combinaison, lesdites cellules étant juxtaposées, ledit ensemble comportant une enceinte unique commune pour l'ensemble des cellules ou bien une enceinte comportant un compartiment pour chaque cellule, ou bien un compartiment pour chaque compartiment des cellules.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective comportant un arraché d'un ensemble comportant deux cellules, chaque cellule étant constituée de trois compartiments,
- La figure 2 est une vue de face d'un clapet selon l'invention,
- La figure 2a est une représentation schématique, illustrant les deux possibilités de mouvement du clapet précité,
- La figure 3 est une vue partielle, illustrant deux languettes de positionnement appartenant au clapet, selon une réalisation particulière de l'invention,
- La figure 4 est une vue de face du clapet,
- La figure 5 illustre la déformation du clapet vers l'extérieur de la cellule,
- La figure 6 illustre la déformation du clapet vers l'intérieur de ladite cellule, et
- Les figures 7,8 et 9 sont des vues en coupe longitudinale suivant un plan perpendiculaire à la surface de support, illustrant respectivement trois localisations différentes d'un défaut d'arc à l'intérieur d'une cellule selon l'invention, et
- Les figures 10 et 11 illustrent respectivement une vue en plan et une vue en coupe d'un clapet monté dans une ouverture de l'enveloppe.

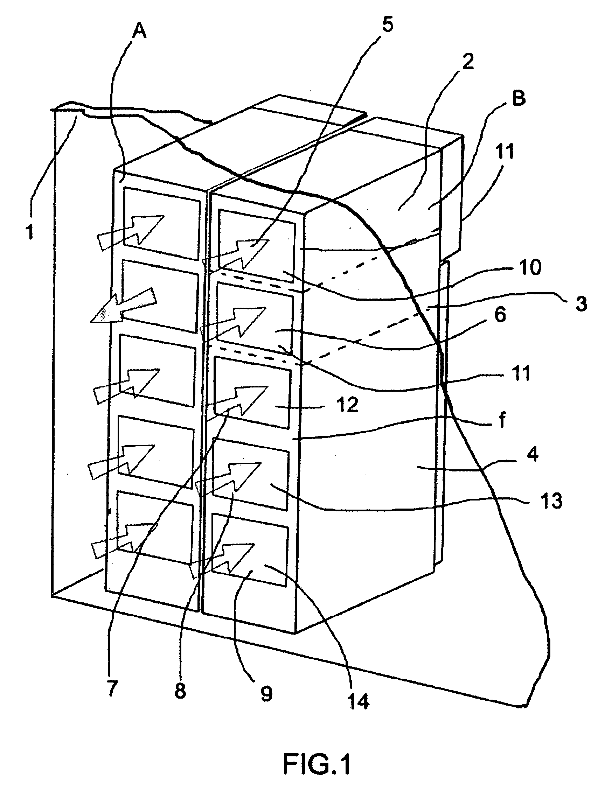

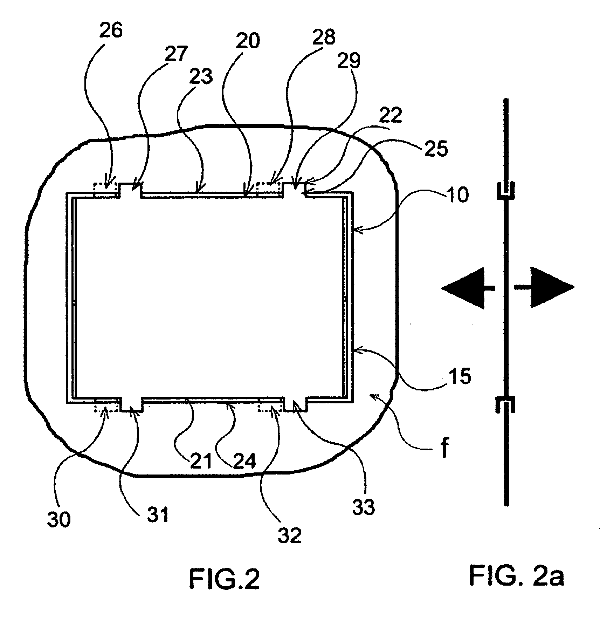

Sur la figure 1, sont représentées deux cellules A,B logeant chacune un appareillage de distribution électrique moyenne ou basse tension et destinées à être fixées sur une surface de support commune 1. Chacune de ces cellules comporte trois compartiments 2,3,4 comportant respectivement un dispositif de limitation de la surpression 5 pour le premier 2, également un dispositif de limitation 6 pour le second 3, et trois dispositifs de limitation 7,8,9 pour le troisième 4. Tel qu'illustré sur la figure 2 et les figures 7 à 9, ces dispositifs de limitation de la surpression comportent chacun une ouverture 10,11,12,13,14 prévue dans la paroi de fond f du compartiment et un clapet 15,16,17,18,19 comportant sur deux bords opposés 20,21, des moyens de maintien 22 destinés à coopérer respectivement avec deux bords 23,24 en regard délimitant l'ouverture précitée dans la paroi 11. Ces clapets 15 à 19 sont destinés à fermer les ouvertures en fonctionnement normal des appareils situés à l'intérieur des compartiments, de manière que les volumes clos à l'intérieur des compartiments, présentent un indice de protection IP3X, et sont destinés à s'ouvrir en cas d'arc interne à l'intérieur des compartiments.

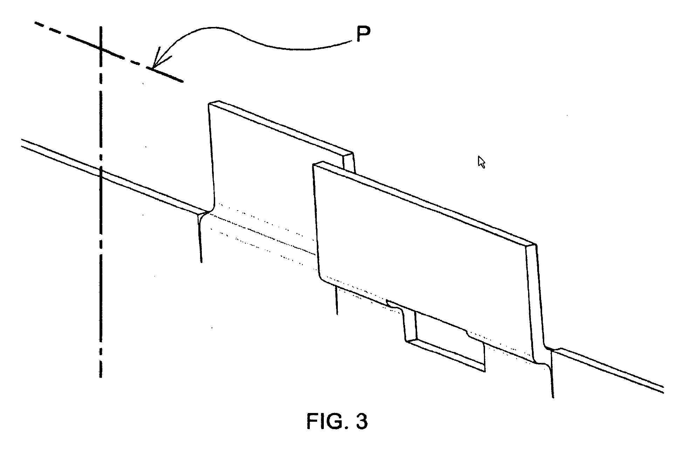

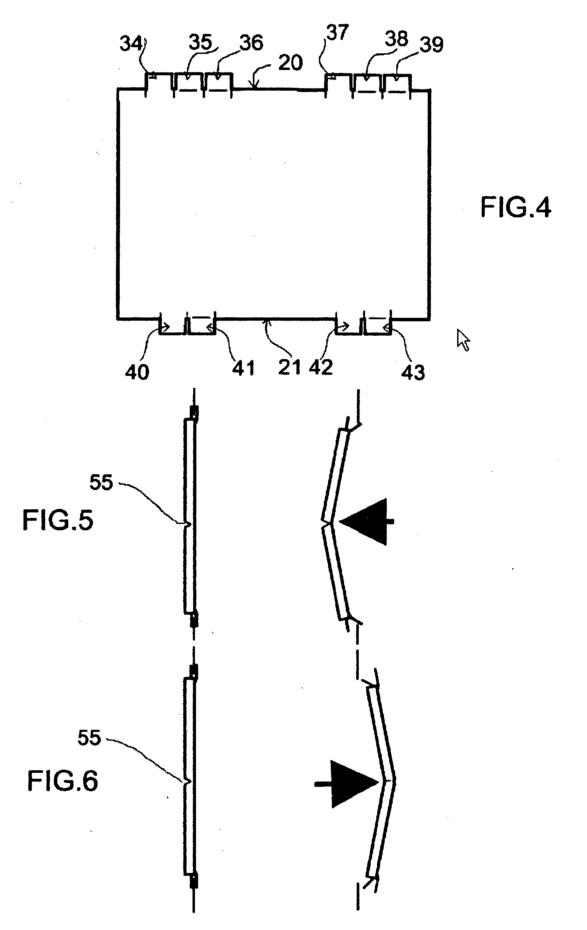

Selon les réalisations illustrées sur les figures 2 à 6, chaque clapet 15 à 19 est de forme rectangulaire et est réalisé en un matériau métallique déformable. Ce clapet comporte sur les deux bords longitudinaux opposés précités 20,21 des moyens d'accrochage 25. Selon la réalisation illustrée sur les figures 2 et 3, ces moyens d'accrochage 25 comportent, sur chacun des bords longitudinaux 20,21 du clapet 15 à 19, deux ensembles de deux languettes 26,27,28,29 et 30,31,32,33 venues de matière avec le clapet et situées de chaque côté du dit bord longitudinal au voisinage dudit bord. Selon la réalisation illustrée sur la figure 4, le clapet comporte sur l'un 20 de ses bords longitudinaux, deux ensembles de trois languettes 34,35,36 et 37,38,39, et sur son bord opposé 21 deux ensembles de deux languettes 40,41 et 42,43, lesdits ensembles de chaque bord étant situés respectivement au voisinage des deux extrémités dudit bord. Lorsque cet ensemble de languettes est constitué de deux languettes, l'une des languettes est situé d'un côté du plan P du clapet tandis que l'autre languette est située de l'autre côté du plan du clapet. Lorsque cet ensemble est constitué de trois languettes, celles-ci sont disposées alternativement d'un côté ou de l'autre du plan du clapet. La mise en place du clapet est réalisée en introduisant le bord correspondant 23 de l'ouverture 10 de la paroi f entre les languettes précitées.

Tel qu'illustré plus particulièrement sur les figures 1,7,8 et 9, les ouvertures précitées 10 à 14 prévues dans la paroi f des compartiments des cellules débouchent d'une part à l'intérieur des cellules A,B, et d'autre part, dans une enceinte 44 située entre la surface de support 1 et la paroi de fond f des dites cellules. Selon cette réalisation, cette enceinte est commune à l'ensemble des compartiments des deux cellules. Cette enceinte est formée par une paroi de fond constituée par la surface de support 1, par une paroi inférieure 45, une paroi supérieure 46, des parois latérales, non représentées, et par la paroi de fond f des compartiments dans laquelle sont prévues les ouvertures précitées 10 à 14, ladite enceinte constituant un espace clos entre la surface de support 1 et les parois de fond f des cellules. On notera également que les clapets précités comportent une rainure 55 dite d'éclatement permettant au clapet de se déformer lorsque la surpression atteint une certaine valeur de manière à permettre au clapet de sortir de son ouverture en échappant aux ailettes.

Selon les réalisations décrites sur ces figures, le seuil d'éclatement pourra être modifié dans un sens ou dans l'autre en faisant varier les capacités de déformation de ces clapets sous l'effet de la pression en jouant par exemple sur les caractéristiques mécaniques du clapet, la taille des éléments de maintien ou de retenue par exemple des languettes, voir des rainures de fragilisation ou bien l'épaisseur de la paroi du clapet.

D'autres solutions de fragilisation des flaps pourront être envisagées, telles que par exemple un clapet constitué par deux parties assemblées par un joint flexible par exemple en élastomère, lequel joint peut comporter deux évidements en regard destinés à recevoir les deux demi-clapets ou bien être adhérisé aux deux demi-clapets.

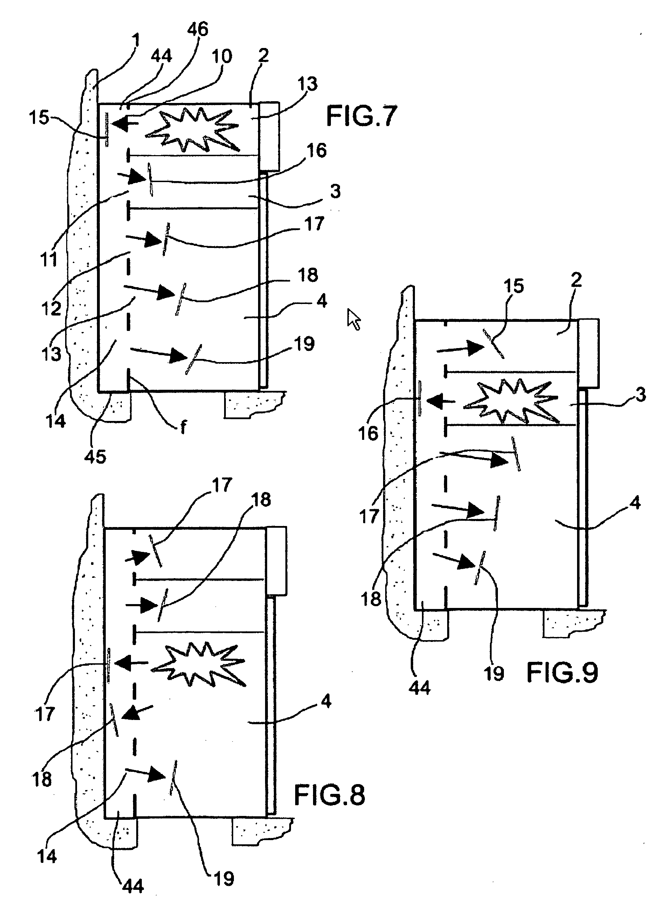

On décrira ci-après le fonctionnement du dispositif selon l'invention en référence aux figures 7 à 9.

Sur la figure 7, un défaut interne se produit dans le premier compartiment 2 de la cellule. Il en résulte une surpression à l'intérieur dudit compartiment provoquant l'ouverture du clapet correspondant 15 vers l'extérieur du compartiment 2, et vers l'intérieur de l'enceinte 44 tel qu'illustré également sur la figure 7. Le déplacement des gaz de l'intérieur du premier compartiment en direction de l'enceinte à travers l'ouverture 10 dégagée par le clapet 15, entraîne une augmentation de la pression à l'intérieur de l'enceinte. Lorsque cette pression à l'intérieur de l'enceinte atteint une certaine valeur, cette surpression entraîne l'ouverture du clapet 16 situé dans le second compartiment 3 et des trois clapets 17,18,19 situés dans le troisième compartiment 4 en direction de l'intérieur des compartiments, tel qu'également illustré sur la figure 6. Ceci entraîne un déplacement des gaz de l'enceinte vers l'intérieur du second compartiment 3 et du troisième compartiment 4, d'où il résulte un équilibrage de la pression à travers tous les compartiments et l'enceinte, laquelle enceinte constitue un compartiment supplémentaire.

Sur la figure 8, le défaut d'arc interne a eu lieu dans le troisième compartiment 4, ce qui a entraîné une surpression à l'intérieur de ce troisième compartiment. Cette surpression a entraîné l'ouverture des deux premiers clapets 17,18 en direction de l'extérieur du troisième compartiment 4. Le déplacement des gaz du troisième compartiment 4 vers l'enceinte 44 a engendré une surpression à l'intérieur de l'enceinte 44, laquelle surpression a entraînée l'ouverture du troisième clapet 19 du compartiment 4. Il s'ensuit un déplacement des gaz de l'enceinte en direction de l'intérieur du troisième compartiment à travers l'ouverture 14 dégagée par le troisième clapet 19 de manière à réaliser un équilibrage de la pression à l'intérieur des différents compartiments et de l'enceinte.

Sur la figure 9, un défaut d'arc interne s'est produit dans le second compartiment 3. Il en résulte une ouverture du clapet 16 du second compartiment 3 vers l'extérieur du compartiment en direction de l'enceinte 44, ce qui permet un déplacement des gaz de l'intérieur du second compartiment 3 vers l'enceinte 44. Ce déplacement des gaz entraîne une surpression à l'intérieur de l'enceinte 44, laquelle surpression entraine une ouverture du clapet 15 du premier compartiment 2 vers l'intérieur du compartiment, et des clapets 17,18,19 du troisième compartiment 4 en direction de l'intérieur desdits compartiments, entraînant le déplacement des gaz de l'intérieur de l'enceinte vers l'intérieur desdits compartiments.

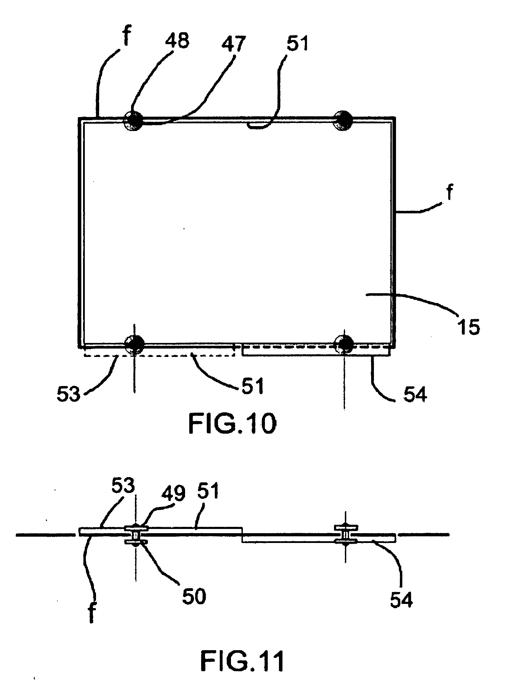

Sur les figures 10 et 11 a été illustrée une autre réalisation de la fixation d'un clapet 15 sur la paroi f de l'enveloppe au moyen de quatre rivets 48 montés respectivement dans quatre ouvertures circulaires 47 de l'enveloppe et supportant chacun deux rondelles calibrées 49,50 placées de part et d'autre de la paroi f de l'enveloppe.

On notera également que le clapet peut comporter avantageusement deux légers rebords 53,54 permettant son maintien lors de son montage contre la tôle de l'enveloppe f.

Le montage du clapet est réalisé par l'introduction du clapet dans l'ouverture de la paroi, ledit clapet étant positionné par les rebords inférieurs. Puis, les rondelles sont fixées aux rivets

On notera que dans le cas d'une fixation par rivets, par joints, ou par un cadre, d'autres formes pourront être envisagées pour le clapet, telles une forme ellipsoïdale ou une forme circulaire, ainsi que d'autres localisations de leurs points d'ancrage, ainsi que de leurs zones de fragilisation.

Dans le cas d'une fixation par un joint, ledit joint pourra être semi conducteur afin de réaliser la continuité de masse.

On notera également que pour les divers modes de fixation, il sera possible à une plus ou moins grande échelle de dissymétriser les pressions d'éclatement dans un sens ou dans le sens contraire, en jouant sur la forme des languettes, la taille des rondelles etc...

Ainsi, selon l'invention, il a été réalisé un dispositif permettant de limiter les surpressions à l'intérieur d'un compartiment d'un appareillage de distribution électrique moyenne ou basse tension, ces surpressions étant consécutives à un défaut d'arc interne.

Ce dispositif est intégré aux cloisons des compartiments formant la cellule et permet de conserver le même degré de protection par rapport à l'extérieur. Ces clapets peuvent s'ouvrir dans les deux sens, ce qui permet d'envisager des écoulements des gaz d'un côté ou de l'autre du clapet. Ainsi, il peut être envisagé divers parcours utilisant les divers compartiments ou caissons en présence, ce qui permet une détente des gaz utilisant au mieux les volumes disponibles.

On notera que l'enceinte pourra être commune à l'ensemble des compartiments d'une même cellule ou à l'ensemble des compartiments de plusieurs cellules.

Selon une autre réalisation, ladite enceinte pourra être compartimentée et comporter un compartiment de détente pour chaque compartiment de la cellule.

L'invention permet de mettre en communication les divers compartiments constituant notamment les cellules d'un tableau électrique, en cas d'arc interne, ces différents volumes constituant des volumes d'expansion. Et ceci au moyen d'un compartiment rapporté qui peut faire communiquer les diverses cellules ou être plus ou moins compartimenté lui-même. Le principe est d'éviter au maximum les manifestations vers l'extérieur toujours préjudiciables aux opérateurs.

Ce type de clapet et son agencement permettent d'abord progressivement d'utiliser les divers volumes des compartiments fermés d'une cellule comme volume d'expansion des gaz chauds. Ceci en utilisant une enceinte ou compartiment supplémentaire, en communication par l'intermédiaire des clapets avec tous les compartiments de cette cellule. Ceci correspond à un premier seuil d'éclatement.

Puis, le clapet situé par exemple sur une paroi située en regard d'une surface de support de la cellule pourra être en communication avec un caniveau de câbles et présenter un seuil d'éclatement supérieur à celui des clapets précédemment cités de manière à libérer son ouverture au-dessus d'une certaine valeur de surpression, après que les autres clapets soient ouverts.

Il pourra également être utile de prévoir des clapets de communication vers l'extérieur situés sur les parois des compartiments en des endroits appropriés par exemple vers le haut des compartiments. Ces derniers pourront être utilisés soit en l'absence de caniveau, soit en cas d'impossibilité d'accès à ces caniveaux, ou bien comme un niveau de protection supplémentaire, ces derniers clapets présentant alors un seuil d'éclatement supérieur aux autres clapets.

Pour ces deux dernières fonctions de clapet, ceux-ci peuvent être différents, et moins sensibles.

Dans les cas où ces clapets communiqueront avec l'extérieur, il pourra être utile soit d'ajouter des tôles de déflection ou de retenue, destinées simplement à empêcher la projection du clapet au loin, ou simplement d'utiliser des clapets unidirectionnels partiellement fixés à l'enveloppe.

L'organisation de ces clapets qui doivent s'ouvrir rapidement et de façon coordonnée, est organisée pour diminuer la pression des divers compartiments où un défaut d'arc interne pourrait survenir, de façon à réduire les déformations des enveloppes et donc les dégagements vers l'extérieur de l'enceinte. Cela est réalisé grâce aux volumes d'expansion et de rééquilibrage des pressions que représentent les divers compartiments mis en communication par ces clapets en fonction de la propagation de l'onde de pression.

Bien entendu, l'invention n'est pas limitée aux modes de réalisation décrits et illustrés qui n'ont été donnés qu'à titre d'exemple.

C'est ainsi que bien que les moyens de maintien décrits et illustrés comportent un système à languettes, l'invention couvre aussi un dispositif de limitation de la pression comportant d'autres types de moyens de maintien tels tout moyen d'accrochage, au moyen de rivets, ressorts, agrafes, pinces ou autres.

## Revendications

1. Dispositif de limitation de la surpression (5, 6, 7, 8, 9) à l'intérieur d'un compartiment (2, 3, 4) appartenant à un appareil électrique, ledit dispositif comportant une ouverture (10, 11, 12, 13, 14) prévue dans l'une des parois de l'enveloppe du compartiment, ladite ouverture (10 à 14) étant obturée ar un clapet (15, 16, 17, 18, 19) pendant le fonctionnement normal de l'appareil électrique, ledit clapet (15 a 19) étant apte à libérer l'ouverture (10 a 14) précitée sous l'effet d'une surpression à l'intérieur du compartiment (2, 3, 4) crée par un défaut interne à l'intérieur du compartiment (2, 3, 4), de manière à permettre l'évacuation des gaz chauds produits par le défaut interne vers l'extérieur du compartiment, (2, 3, 4) ce clapet (15 à 19) est intégré à la paroi f de l'enveloppe du compartiment (2,3,4), et est maintenu sur ladite paroi dans l'ouverture précitée (10 à 14) par des moyens de maintien (22) permettant au clapet de s'ouvrir dans les deux sens, c'est-à-dire vers l'extérieur du compartiment (2,3,4) de manière à permettre la circulation des gaz de l'intérieur vers l'extérieur du compartiment, ou bien vers l'intérieur du compartiment de manière à permettre la circulation des gaz de l'extérieur vers l'intérieur du compartiment selon que la surpression est présente à l'intérieur ou à l'extérieur du compartiment (2,3,4), **caractérisé en ce que** le clapet (15 à 19) est apte à se déformer lors d'une surpression à l'intérieur ou à l'extérieur du compartiment, ladite déformation conduisant à la désactivation des moyens de maintien (22) entraînant le dégagement du clapet (15 à 19) de l'ouverture (10 à 14) de la paroi f de l'enveloppe et donc la circulation des gaz à travers l'ouverture (10 à 14).

2. Dispositif de limitation de la surpression selon la revendication 1, **caractérisé en ce que** les moyens de maintien précités (22) comportent sur deux bords extérieurs opposés (20,21) du clapet (15 à 19), des moyens d'accrochage destinés à coopérer avec respectivement deux bords en regard (23,24) délimitant l'ouverture (10 à 14) de la paroi précitée f.

3. Dispositif de limitation de la surpression selon la revendication 2, **caractérisé en ce que** ces moyens d'accrochage comprennent, sur chacun des bords opposés précités (20,21) du clapet (15 à 19), au moins deux languettes (26 à 32) solidaires du clapet, les deux languettes s'étendant respectivement de part et d'autre du plan P du clapet, de manière à réaliser la fixation du clapet sur la paroi f par introduction du bord correspondant (23,24) de la paroi f délimitant l'ouverture (10 à 14) entre les deux languettes précitées.

4. Dispositif de limitation de la surpression selon la revendication 3, **caractérisé en ce que** ces languettes sont venues de matière avec la paroi f du clapet (15 à 19) et sont décalées suivant la direction longitudinale du bord (20,21) correspondant du clapet (15 à 19).

5. Dispositif de limitation de la surpression selon la revendication 1, **caractérisé en ce que** les moyens de maintien précités (22) comportent, sur au moins deux bords opposés (20,21) du clapet (15 à 19), un joint s'étendant sur une partie ou la totalité desdits bords, le(les)dit(s) joint(s) coopérant respectivement avec deux bords en regard délimitant l'ouverture précitée (10 à 14) lors de la fixation précitée.

6. Dispositif de limitation de la surpression selon la revendication 1, **caractérisé en ce que** les moyens de maintien précités (22) comportent un cadre réalisé en un matériau présentant une faible tenue mécanique, ledit cadre étant fixé autour du clapet et sur le bord de la paroi délimitant l'ouverture précitée (10 à 14), ledit cadre étant destiné à céder sous l'effet d'une certaine pression.

7. Dispositif de limitation de la surpression selon la revendication 1, **caractérisé en ce que** les moyens de maintien précités (22) comportent des ouvertures (47) prévues dans la paroi f et permettant chacune le passage d'un rivet (48) supportant deux rondelles (49,50) de dimension calibrée et situées de part et d'autre de la paroi de l'enveloppe f, ledit clapet étant destiné à être maintenu entre les deux rondelles après le montage dudit clapet dans ladite ouverture de la paroi.

8. Cellule électrique comportant au moins un compartiment (2,3,4), ledit compartiment (2) logeant un appareillage électrique, **caractérisée en ce que** ledit compartiment comporte au moins un dispositif de limitation de la surpression selon l'une quelconque des revendications 1 à 7.

9. Cellule électrique selon la revendication 8, **caractérisée en ce qu'**elle comporte en outre une enceinte (44) formant un espace clos autour de l'ouverture d'au moins l'un des dispositifs de limitation précités, ladite enceinte (44) étant destinée à recevoir les gaz en provenance du (des) compartiment(s) en surpression, lesdits gaz circulant de l'intérieur du (des) compartiment(s) (2,3,4) vers l'enceinte (44) ou bien de l'intérieur de l'enceinte vers le(les) compartiment(s) selon que la surpression se situe, au niveau de l' (des) ouverture(s) précitée(s), à l'intérieur du(des) compartiment(s) ou bien à l'intérieur de l'enceinte.

10. Cellule électrique selon la revendication 8 ou 9, **caractérisée en ce qu'**elle comporte plusieurs compartiments (2,3,4) comportant chacun au moins un dispositif de limitation de la surpression selon l'une quelconque des revendications 1 à 7, et une enceinte (44) commune à tous les compartiments.

11. Cellule électrique selon l'une quelconque des revendications 8 à 10, **caractérisée en ce qu'**elle comporte trois compartiments comportant respectivement un dispositif de limitation de la surpression, pour le premier (2), un dispositif de limitation de la surpression (6) pour le second (3), et trois dispositifs de limitation de la surpression (7,8,9) pour le troisième (4).

12. Cellule électrique selon l'une quelconque des revendications 8 à 11, **caractérisée en ce que** l'un au moins des compartiments ou l'enceinte comporte au moins un clapet communiquant avec un caniveau contenant les câbles raccordés à l'appareillage, le seuil d'éclatement du clapet de ce(ces) dispositif(s) étant défini de façon que le(s) clapet(s) communiquant avec le caniveau sorte(nt) de son (leur) ouverture correspondante après les autres clapets.

13. Cellule électrique selon l'une quelconque des revendications 8 à 12, **caractérisée en ce que** l'un au moins des compartiments ou l'enceinte comporte au moins un clapet communiquant avec l'extérieur, le seuil d'éclatement du clapet de ce (ces) dispositif(s) étant défini de façon que le(s) clapet(s) communiquant avec l'extérieur sorte(nt) de son(leur) ouverture correspondante après les autres clapets.

14. Ensemble d'au moins deux cellules selon l'une quelconque des revendications 8 à 13, lesdites cellules étant juxtaposées, ledit ensemble comportant une enceinte unique commune (44) pour l'ensemble des cellules, ou bien une enceinte comportant un compartiment pour chaque cellule, ou bien une enceinte comportant un compartiment pour chaque compartiment des cellules.

## Patentansprüche

1. Vorrichtung (5, 6, 7, 8, 9) zur Begrenzung des Überdrucks im Inneren eines Abteils (2, 3, 4) eines elektrischen Schaltgeräts, welche Vorrichtung eine in einer der Gehäusewände des Abteils ausgebildete, im Normalbetrieb des elektrischen Schaltgeräts durch eine Klappe (15, 16, 17, 18, 19) verschlossene Öffnung (10, 11, 12, 13, 14) umfasst, welche Klappe (15 bis 19) so ausgelegt ist, dass sie bei Auftreten eines Überdrucks infolge einer internen Störung im Abteil (2, 3, 4) die genannte Öffnung (10 bis 14) freigibt, so dass die durch die interne Störung erzeugten heißen Gase aus dem Abteil (2, 3, 4) herausgeführt werden können, wobei die genannte Klappe (15 bis 19) in die Gehäusewand f des Abteils (2, 3, 4) eingesetzt ist und in dieser Wand durch Haltemittel (22) in der genannten Öffnung (10 bis 14) gehalten wird, welche Haltemittel in Abhängigkeit davon, ob ein Überdruck innerhalb oder außerhalb des Abteils (2, 3, 4) auftritt, eine Öffnung der Klappe in zwei Richtungen erlauben, d.h. zur Außenseite des Abteils (2, 3, 4), so dass eine Gasströmung vom Inneren des Abteils nach außerhalb des Abteils erfolgen kann, oder zur Innenseite des Abteils, so dass eine Gasströmung von außerhalb des Abteils ins Innere des Abteils erfolgen kann, **dadurch gekennzeichnet, dass** die Klappe (15 bis 19) in der Lage ist, sich bei Auftreten eines Überdrucks innerhalb oder außerhalb des Abteils zu verformen und diese Verformung das Lösen der Haltemittel (22) bewirkt, so dass die Klappe (15 bis 19) die in der Gehäusewand f ausgebildete Öffnung (10 bis 14) freigibt und die Gase durch die Öffnung (10 bis 14) hindurchströmen können.

2. Überdruck-Begrenzungsvorrichtung nach Anspruch 1, **dadurch gekennzeichnet, dass** die genannten Haltemittel (22) an zwei einander gegenüberliegenden Außenrändern (20, 21) der Klappe (15 bis 19) ausgebildete Rastmittel umfassen, die dazu dienen, mit zwei einander gegenüber liegenden, die Öffnung (11 bis 14) der genannten Wand f begrenzenden Rändern (23, 24) zusammenwirken.

3. Überdruck-Begrenzungsvorrichtung nach Anspruch 2, **dadurch gekennzeichnet, dass** die genannten Rastmittel an jedem der genannten, einander gegenüber liegenden Rändern (20, 21) der Klappe (15 bis 19) mindestens zwei mit der Klappe verbundene Zungen (26 bis 32) umfassen, welche Zungen zu beiden Seiten der Ebene P der Klappe angeordnet sind, derart, dass die Befestigung der Klappe in der Wand f durch Einführen des entsprechenden, die Öffnung (10 bis 14) begrenzenden Randes (23, 24) der Wand f zwischen den beiden genannten Zungen erfolgt.

4. Überdruck-Begrenzungsvorrichtung nach Anspruch 3, **dadurch gekennzeichnet, dass** die genannten Zungen an die W and der Klappe (15 bis 19) angeformt und in Längsrichtung des entsprechenden Rands (20, 21) der Klappe (15 bis 19) gesehen versetzt zueinander angeordnet sind.

5. Überdruck-Begrenzungsvorrichtung nach Anspruch 1, **dadurch gekennzeichnet, dass** die genannten Haltemittel (22) eine an mindestens zwei einander gegenüberliegenden Rändern (20, 21) der Klappe (15 bis 19) ausgebildete Dichtung umfassen, die sich über einen Teilabschnitt oder über die gesamte Länge der genannten Ränder erstreckt, wobei die genannte Dichtung/die genannten Dichtungen bei der genannten Befestigung mit zwei einander gegenüber liegenden, die genannte Öffnung (10 bis 14) begrenzenden Rändern zusammenwirken.

6. Überdruck-Begrenzungsvorrichtung nach Anspruch 1, **dadurch gekennzeichnet, dass** die genannten Haltemittel (22) einen Rahmen aus einem Werkstoff mit geringer mechanischer Festigkeit umfassen, welcher Rahmen um die Klappe sowie um den Rand der die genannte Öffnung (10 bis 14) begrenzenden Wand herum befestigt und dazu ausgelegt ist, bei einem bestimmten Druck nachzugeben.

7. Überdruck-Begrenzungsvorrichtung nach Anspruch 1, **dadurch gekennzeichnet, dass** die genannten Haltemittel (22) in der Wand f ausgebildete Öffnungen (47) umfassen, durch die jeweils ein Niet (48) hindurchgeführt werden kann, auf dem auf jeder Seite der Gehäusewand f eine Unterlegscheibe (49, 50) mit bestimmtem Durchmesser angeordnet ist, wobei die genannte Klappe dazu ausgelegt ist, nach ihrem Einsetzen in die genannte Wandöffnung zwischen den beiden Unterlegscheiben gehalten zu werden.

8. Elektrische Schaltzelle mit mindestens einem Abteil (2, 3, 4), in welchem Abteil (2) ein elektrisches Schaltgerät angeordnet ist, **dadurch gekennzeichnet, dass** das genannte Abteil, mindestens eine Überdruck-Begrenzungsvorrichtung nach irgendeinem der Ansprüche 1 bis 7 umfasst.

9. Elektrische Schaltzelle nach Anspruch 8, **dadurch gekennzeichnet, dass** sie außerdem eine Kammer (44) umfasst, die um die Öffnung der mindestens einfach vorhandenen Überdruck-Begrenzungsvorrichtung herum einen geschlossenen Raum bildet und dazu dient, die von dem/den unter Überdruck stehenden Abteil/Abteilen stammenden Gase aufzunehmen, welche Gase in Abhängigkeit davon, ob der im Bereich der Öffnung herrschende Überdruck innerhalb oder außerhalb des Abteils/der Abteile vorhanden ist, vom Inneren des Abteils/der Abteile (2, 3, 4) in die Kammer (44) oder vom Inneren der Kammer in das Abteil/die Abteile strömen.

10. Elektrische Schaltzelle nach Anspruch 8 oder 9, **dadurch gekennzeichnet, dass** sie mehrere Abteile (2, 3, 4) mit jeweils mindestens einer Überdruck-Begrenzungsvorrichtung nach irgendeinem der Ansprüche 1 bis 7 sowie eine allen Abteilen gemeinsam zugeordnete Kammer (44) umfasst.

11. Elektrische Schaltzelle nach irgendeinem der Ansprüche 8 bis 10, **dadurch gekennzeichnet, dass** sie drei Abteile mit einer Überdruck-Begrenzungsvorrichtung für das erste Abteil (2), einer Überdruck-Begrenzungsvorrichtung (6) für das zweite Abteil (3) und drei Überdruckbegrenzungs-Vorrichtungen (7, 8, 9) für das dritte Abteil (4) umfasst.

12. Elektrische Schaltzelle nach irgendeinem der Ansprüche 8 bis 11, **dadurch gekennzeichnet, dass** mindestens eines der Abteile oder die Kammer mindestens eine Klappe umfasst, die mit einem Kabelkanal zur Führung der an die Schaltgeräte angeschlossenen Kabel verbunden ist, wobei der Schwellwert zur Aktivierung der Klappe der Vorrichtung/Vorrichtungen so festgelegt ist, dass die mit dem Kabelkanal verbundene Klappe/verbundenen Klappen sich nach den anderen Klappen von der zugeordneten Öffnung zurückzieht/ zurückziehen.

13. Elektrische Schaltzelle nach irgendeinem der Ansprüche 8 bis 12, **dadurch gekennzeichnet, dass** mindestens eines der Abteile oder die Kammer mindestens eine Klappe umfasst, die mit der äußeren Umgebung verbunden ist, wobei der Schwellwert zur Aktivierung der Klappe der Vorrichtung/Vorrichtungen so festgelegt ist, dass die mit der äußeren Umgebung verbundene Klappe/verbundenen Klappen sich nach den anderen Klappen von der zugeordneten Öffnung zurückzieht/zurückziehen.

14. Anordnung aus mindestens zwei, nebeneinander aufgestellten Schaltzellen nach irgendeinem der Ansprüche 8 bis 13, welche Anordnung eine einzige, gemeinsame Kammer (44) für alle Schaltzellen oder eine Kammer mit einem Abteil für jede Schaltzelle, oder eine Kammer mit einem Abteil für jedes Abteil der Schaltzellen umfasst.

## Claims

1. A device for limiting overpressure (5,6,7,8,9) inside a compartment (2,3,4) belonging to an electric equipment unit, said device comprising an opening (10,11,12,13,14) provided in one of the panels of the enclosure of the compartment, said opening (10 to 14) being sealed off by a valve (15,16,17,18,19) during normal operation of the electric equipment unit, said valve (15 to 19) being designed to release the above-mentioned opening (10 to 14) due to the effect of an overpressure inside the compartment (2,3,4) created by an internal fault inside the compartment (2,3,4) so as to enable the hot gases produced by the internal fault to be removed to the outside of the compartment (2,3,4),
this valve (15 to 19) is integrated in the panel f of the enclosure of the compartment (2,3,4) and is secured on said panel in the above-mentioned opening (10 to 14) by securing means (22) enabling the valve to open in both directions, i.e. towards the outside of the compartment (2,3,4) so as to enable flow of the gases from the inside to the outside of the compartment, or towards the inside of the compartment so as to enable flow of the gases from the outside to the inside of the compartment depending on whether the overpressure is present inside or outside the compartment (2,3,4), **characterized in that** the valve (15 to 19) is able to deform when an overpressure occurs inside or outside the compartment, said deformation leading to deactivation of the securing means (22) resulting in release of the valve (15 to 19) from the opening (10 to 14) of the panel f of the enclosure thereby resulting in flow of the gases through the opening (10 to 14).

2. The device for limiting overpressure according to claim 1, **characterized in that** the above-mentioned securing means (22) comprise, on two opposite outside edges (20,21) of the valve (15 to 19), latching means designed to operate in conjunction respectively with two facing edges (23,24) delineating the opening (10 to 14) of the above-mentioned panel f.

3. The device for limiting overpressure according to claim 2, **characterized in that**, on each of the above-mentioned opposite edges (20,21) of the valve (15 to 19), these latching means comprise at least two tabs (26 to 32) securedly attached to the valve, the two tabs respectively extending on each side of the plane P of the valve so as to perform fixing of the valve on the panel f by insertion of the corresponding edge (23,24) of the panel f delineating the opening (10 to 14) between the above-mentioned two tabs.

4. The device for limiting overpressure according to claim 3, **characterized in that** these tabs are moulded with the panel f of the valve (15 to 19) and are offset in a longitudinal direction of the corresponding edge (20,21) of the valve (15 to 19).

5. The device for limiting overpressure according to claim 1, **characterized in that**, on at least two opposite edges (20,21) of the valve (15 to 19), the above-mentioned securing means (22) comprise a seal extending over a part or the whole of said edges, said seal(s) respectively operating in conjunction with two facing edges delineating the above-mentioned opening (10 to 14) when the above-mentioned fixing is performed.

6. The device for limiting overpressure according to claim 1, **characterized in that** the above-mentioned securing means (22) comprise a frame made from a material presenting a low mechanical strength, said frame being fixed around the valve and on the edge of the panel delineating the above-mentioned opening (10 to 14), said frame being designed to yield under the effect of a certain pressure.

7. The device for limiting overpressure according to claim 1, **characterized in that** the above-mentioned securing means (22) comprise openings (47) provided in the panel f and each enabling passage of a rivet (48) supporting two washers (49,50) of calibrated dimension situated on each side of the panel of the enclosure f, said valve being designed to be secured between the two washers after said valve has been fitted in said opening of the panel.

8. An electric cubicle comprising at least one compartment (2,3,4), said compartment housing an electric switchgear unit, **characterized in that** said compartment comprises at least one device for limiting overpressure according to any one of claims 1 to 7.

9. The electric cubicle according to claim 8, **characterized in that** it further comprises a chamber (44) forming a closed space around the opening of at least one of the above-mentioned limiting devices, said chamber (44) being designed to receive the gases coming from the compartment(s) in which an overpressure has occurred, said gases flowing from the inside of the compartment(s) (2,3,4) to the chamber (44) or from the inside of the chamber to the compartment(s) depending on whether the overpressure is located, at the level of the above-mentioned opening(s), inside the compartment(s) or inside the chamber.

10. The electric cubicle according to claim 8 or 9, **characterized in that** it comprises several compartments (2,3,4) each comprising at least one device for limiting overpressure according to any one of claims 1 to 7, and a chamber (44) common to all the compartments.

11. The electric cubicle according to any one of claims 8 to 10, **characterized in that** it comprises three compartments respectively comprising a device for limiting overpressure for the first compartment (2), a device for limiting overpressure (6) for the second compartment (3), and three devices for limiting overpressure (7,8,9) for the third compartment (4).

12. The electric cubicle according to any one of claims 8 to 11, **characterized in that** at least one of the compartments or the chamber comprises at least one valve communicating with a trough containing the cables connected to the switchgear unit, the bursting threshold of the valve of this(these) device(s) being defined so that the valve(s) communicating with the trough leaves(leave) its(their) corresponding opening after the other valves.

13. The electric cubicle according to any one of claims 8 to 12, **characterized in that** at least one of the compartments or the chamber comprises at least one valve communicating with the outside, the bursting threshold of the valve of this(these) device(s) being defined such that the valve(s) communicating with the outside leaves(leave) its(their) corresponding opening after the other valves.

14. An assembly of at least two cubicles according to any one of claims 8 to 13, said cubicles being juxtaposed, said assembly comprising a single common chamber (44) for all the cubicles, or a chamber comprising a compartment for each cubicle, or a chamber comprising a compartment for each compartment of the cubicles.
